# EUROPEAN PATENT APPLICATION

(11) **EP 4 273 101 A1**
(43) Date of publication of application: **08.11.2023**
(21) Application number: 22753036.7
(22) Date of filing: 15.02.2022
(51) Int. Cl.: C01G 53/00, H01M 4/525, H01M 4/505

(54) **POSITIVE ELECTRODE ACTIVE MATERIAL PRECURSOR, AND METHOD FOR PRODUCING SAME**

(30) Priority: 15.02.2021 KR 20210020103
(71) Applicant: Lg Chem, Ltd., Seoul 07336 (KR)
(72) Inventor: YE, Seong Ji, Daejeon 34122 (KR); LEE, Min Joon, Daejeon 34122 (KR); PARK, Yoon Bin, Daejeon 34122 (KR)
(74) Representative: Hoffmann Eitle
(86) International application number: PCT/KR2022/002241
(87) International publication number: WO 2022/173276

(57) **Abstract**

The present invention relates to a method of preparing a precursor for a positive electrode active material which includes a seed forming step of forming precursor seeds for a positive electrode active material by performing a co-precipitation reaction while supplying a transition metal aqueous solution, an ammonium cationic complexing agent, and a basic compound to a reactor, and a particle growing step of growing precursor particles for a positive electrode active material by performing a co-precipitation reaction while supplying a transition metal aqueous solution, an ammonium cationic complexing agent, and a basic compound to a reaction solution in which the precursor seeds for a positive electrode active material have been formed, wherein feed rates of the transition metal aqueous solution and the ammonium cationic complexing agent in the particle growing step are two or more times feed rates of the transition metal aqueous solution and the ammonium cationic complexing agent in the seed forming step, respectively.

## Description

### TECHNICAL FIELD

This application claims priority from Korean Patent Application No. 10-2021-0020103, filed on February 15, 2021, the disclosure of which is incorporated by reference herein.

The present invention relates to a precursor for a positive electrode active material which is used in a secondary battery and a method of preparing the same, and more particularly, to a precursor for a positive electrode active material which has excellent reactivity with lithium during sintering and a method of preparing the same.

### BACKGROUND ART

Demand for secondary batteries as an energy source has been significantly increased as technology development and demand with respect to mobile devices have increased. Among these secondary batteries, lithium secondary batteries having high energy density, high voltage, long cycle life, and low self-discharging rate have been commercialized and widely used.

Lithium composite transition metal oxides containing two or more transition metals, such as nickel, cobalt, manganese, and aluminum, have been used as a positive electrode active material of the lithium secondary battery.

The lithium composite transition metal oxide is generally prepared by a method of adding a metal solution containing transition metal elements as a raw material, an ammonium cationic complexing agent, and a basic aqueous solution to a continuous stirred tank reactor (CSTR) or batch reactor and performing a co-precipitation reaction to prepare a precursor in the form of a hydroxide, mixing the precursor with a lithium raw material, and then sintering the mixture.

The continuous stirred tank reactor (CSTR) discharges a precursor composed of particles simultaneously while raw materials are added and co-precipitated, and, with respect to the batch reactor, raw materials are added according to a volume of the reactor, the addition of the raw materials is stopped when the reactor is full and a reaction proceeds, and a precursor is then discharged after the completion of the reaction.

In a case in which the precursor is prepared by using the continuous stirred tank reactor (CSTR), there is an advantage in that productivity of the precursor is high because the precursor is discharged simultaneously while the reaction raw materials are added and co-precipitated, but, since the addition of the raw materials and the discharge of the product continuously occur at the same time, variations in residence time and reaction time of the positive electrode active material precursors formed in the reactor may be present, and, accordingly, there is a limitation in that non-uniformity in size and particle size distribution of the precursor particles formed occurs. Thus, in order to ensure uniformity of quality of the precursor, a method of preparing the precursor using the batch reactor has mainly been used.

However, with respect to the method of preparing the precursor for a positive electrode active material using the batch reactor, since surface density of the precursor particles increases while growth rate of the precursor particles is reduced as the co-precipitation reaction time elapses and a size of primary particles increases, surface energy of the precursor particles is reduced, and, as a result, there has been a problem in that uniform sintering is difficult because reactivity with the lithium raw material during sintering is reduced and penetration of a lithium element and a doping element into the precursor particles is suppressed. Also, in a case in which the batch reactor is used to prepare the precursor for a positive electrode active material, there is also a problem in that productivity is reduced.

Thus, there is a need to develop a precursor for a positive electrode active material which has excellent reactivity with the lithium raw material during sintering.

### DISCLOSURE OF THE INVENTION

### TECHNICAL PROBLEM

An aspect of the present invention provides a method of preparing a precursor for a positive electrode active material which has excellent reactivity with a lithium raw material during sintering by controlling surface density of precursor particles by adjusting feed flow rates of raw materials during the preparation of the precursor.

### TECHNICAL SOLUTION

According to an aspect of the present invention, there is provided a method of preparing a precursor for a positive electrode active material which includes: a seed forming step of forming precursor seeds for a positive electrode active material by performing a co-precipitation reaction while supplying a transition metal aqueous solution, an ammonium cationic complexing agent, and a basic compound to a reactor; and a particle growing step of growing precursor particles for a positive electrode active material by performing a co-precipitation reaction while supplying a transition metal aqueous solution, an ammonium cationic complexing agent, and a basic compound to a reaction solution in which the precursor seeds for a positive electrode active material have been formed, wherein feed rates of the transition metal aqueous solution and the ammonium cationic complexing agent in the particle growing step are two or more times feed rates of the transition metal aqueous solution and the ammonium cationic complexing agent in the seed forming step, respectively.

According to another aspect of the present invention, there is provided a precursor for a positive electrode active material which is prepared by the above preparation method, and a positive electrode active material prepared by using the precursor for a positive electrode active material.

### ADVANTAGEOUS EFFECTS

A method of preparing a precursor for a positive electrode active material of the present invention allowed to prepare precursor particles with low surface density and small primary particle size by increasing a reaction rate by rapidly increasing a feed rate of a transition metal aqueous solution, as a reaction raw material, to two or more times in a precursor particle growing step. If the surface density and primary particle size of the precursor particles are reduced, a specific surface area is increased, and, as a result, reactivity with a lithium raw material is improved in a sintering step to improve sintering uniformity and develop a crystal structure well. Accordingly, in a case in which a positive electrode active material, which is prepared by using the precursor prepared according to the method of the present invention, is used in a secondary battery, an effect of improving capacity characteristics and high-temperature cycle characteristics may be obtained.

Also, according to the method of preparing a precursor for a positive electrode active material of the present invention, precursor particles having excellent particle size uniformity may be prepared, and, since reaction time required to form precursor particles having a desired particle diameter is reduced, an effect of increasing productivity may be obtained. In a case in which a feed amount of the reaction raw material is increased, a growth rate of the precursor particles may be increased to reduce the reaction time, but, if a large amount of the reaction raw material is added from an initial stage of the reaction, there is a problem in that the particle size of the precursor particles becomes non-uniform. In contrast, the present invention allowed to improve the productivity while preventing the particle size of the finally prepared precursor particles from being non-uniform by supplying the reaction raw material at a low feed rate at the initial stage of the reaction in which seeds are formed and increasing the feed rate of the reaction raw material after the seeds are sufficiently formed.

### BRIEF DESCRIPTION OF THE DRAWINGS

FIG. 1 is scanning electron microscope (SEM) images illustrating surface characteristics and particle size distribution of a precursor prepared by Example 1;
FIG. 2 is scanning electron microscope (SEM) images illustrating surface characteristics and particle size distribution of a precursor prepared by Comparative Example 1;
FIG. 3 is scanning electron microscope (SEM) images illustrating surface characteristics and particle size distribution of a precursor prepared by Comparative Example 2;
FIG. 4 is scanning electron microscope (SEM) images illustrating particle size distributions of precursors collected in processes of preparing precursors of Example 1, Example 2, Comparative Example 3, and Comparative Example 4;
FIG. 5 is a graph illustrating specific capacity-voltage profiles which are measured by charging/discharging secondary batteries, in which positive electrode active materials prepared by Example 1, Comparative Example 1, and Comparative Example 2 are used, at 0.1 C/0.1 C; and
FIG. 6 is a graph illustrating high-temperature life characteristics of the secondary batteries in which the positive electrode active materials prepared by Example 1, Comparative Example 1, and Comparative Example 2 are used.

### MODE FOR CARRYING OUT THE INVENTION

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

### Method of Preparing Precursor for Positive Electrode Active Material

As a result of a significant amount of research conducted into developing a precursor for a positive electrode active material having excellent reactivity with lithium during sintering, the present inventors have found that precursor particles with low surface density and high specific surface area may be prepared by rapidly increasing a feed rate of a reaction raw material at a specific point during the preparation of the precursor and the reactivity with lithium during sintering may be improved when this precursor is used, thereby leading to the completion of the present invention.

Specifically, a method of preparing a precursor for a positive electrode active material according to the present invention is characterized in that the method includes the steps of: (1) a seed forming step of forming precursor seeds for a positive electrode active material by performing a co-precipitation reaction while supplying a transition metal aqueous solution, an ammonium cationic complexing agent, and a basic compound to a reactor, and (2) a particle growing step of growing precursor particles for a positive electrode active material by performing a co-precipitation reaction while supplying a transition metal aqueous solution, an ammonium cationic complexing agent, and a basic compound to a reaction solution in which the precursor seeds for a positive electrode active material have been formed, wherein feed rates of the transition metal aqueous solution and the ammonium cationic complexing agent in (2) the particle growing step are two or more times feed rates of the transition metal aqueous solution and the ammonium cationic complexing agent in (1) the seed forming step, respectively.

Hereinafter, the method of preparing a precursor for a positive electrode active material according to the present invention will be described in more detail.

### (1) Seed Forming Step

First, a transition metal aqueous solution, an ammonium cationic complexing agent, and a basic compound are supplied to a reactor, and a co-precipitation reaction is performed while stirring to form precursor seeds.

It is desirable that the reactor is a batch reactor. The reason for this is that, in a case in which a precursor is prepared by using a continuous stirred tank reactor (CSTR), it is difficult to control a particle size of precursor particles.

The reactor may include a reaction mother liquor. Specifically, before supplying the transition metal aqueous solution, as a reaction raw material, the ammonium cationic complexing agent, and the basic compound, an ammonium cationic complexing agent, a basic compound, and water may be first added into the reactor to form the reaction mother liquor.

In this case, the ammonium cationic complexing agent may be at least one selected from the group consisting of NH₄OH, (NH₄)₂SO₄, NH₄NO₃, NH₄Cl, CH₃COONH₄, and (NH₄)₂CO₃, and may be added into the reactor in the form of a solution in which the above compound is dissolved in a solvent. In this case, water or a mixture of water and an organic solvent (specifically, alcohol etc.), which may be uniformly mixed with the water, may be used as the solvent.

Next, the basic compound may be at least one selected from the group consisting of NaOH, KOH, and Ca(OH)₂, and may be added into the reactor in the form of a solution in which the above compound is dissolved in a solvent. In this case, water or a mixture of water and an organic solvent (specifically, alcohol etc.), which may be uniformly mixed with the water, may be used as the solvent.

The reaction mother liquor may be formed to have a pH of 11.0 to 13.0, for example, 11.5 to 12.5. When the pH of the reaction mother liquor satisfies the above range, seed formation may be smoothly performed.

After the reaction mother liquor is formed by adding the ammonium cationic complexing agent, the basic compound, and the water to the reactor, it is preferable to remove oxygen in the reaction mother liquor by purging with nitrogen gas.

Next, a transition metal aqueous solution, an ammonium cationic complexing agent, and a basic compound are supplied to the reactor, and a co-precipitation reaction is performed while stirring to form precursor seeds.

If the transition metal aqueous solution, ammonium cationic complexing agent and basic compound are supplied to the reactor containing the reaction mother liquor and stirred, precursor nuclei in the form of primary particles are formed (nucleation) as the co-precipitation reaction proceeds, and seeds in the form of a secondary particle are formed while the nuclei in the form of primary particles are aggregated,

In this case, the transition metal aqueous solution may contain nickel, cobalt, and manganese elements, and may be formed by mixing a nickel raw material, a cobalt raw material, and a manganese raw material with water.

The nickel raw material may be Ni(OH)₂, NiO, NiOOH, NiCO₃·2Ni(OH)₂·4H₂O, NiC₂O₂·2H₂O, Ni(NO₃)₂·6H₂O, NiSO₄, NiSO₄·6H₂O, a fatty acid nickel salt, or a nickel halide, and any one thereof or a mixture of two or more thereof may be used.

The cobalt raw material may be Co(OH)₂, CoOOH, Co(OCOCH₃)₂·4H₂O, Co(NO₃)₂·6H₂O, or CoSO₄·7H₂O, and any one thereof or a mixture of two or more thereof may be used.

The manganese raw material may be a manganese oxide such as Mn₂O₃, MnO₂, and Mn₃O₄; a manganese salt such as MnCO₃, Mn(NO₃)₂, MnSO₄, manganese acetate, manganese dicarboxylate, manganese citrate, and a fatty acid manganese salt; an oxyhydroxide, and manganese chloride, and any one thereof or a mixture of two or more thereof may be used.

If necessary, the transition metal aqueous solution may further include a doping element (M¹) in addition to the nickel, cobalt, and manganese. In this case, M¹ may include at least one selected from the group consisting of aluminum (Al), tungsten (W), molybdenum (Mo), chromium (Cr), zirconium (Zr), titanium (Ti), magnesium (Mg), tantalum (Ta), and niobium (Nb) . In a case in which the transition metal aqueous solution further includes the doping element, an effect of improving life characteristics, discharge characteristics, and/or stability may be achieved.

In the case that the transition metal aqueous solution further includes the doping element M¹, a doping element M¹-containing raw material may be optionally further added during the preparation of the transition metal aqueous solution.

At least one selected from the group consisting of an acetic acid salt, sulfate, sulfide, hydroxide, oxide, or oxyhydroxide containing the doping element M¹ may be used as the doping element M¹-containing raw material.

The transition metal aqueous solution may include the nickel raw material such that an amount of nickel is 30 mol% or more, preferably 80 mol% or more, and more preferably 85 mol% or more, for example, 90 mol% or more based on a total number of moles of transition metals. In a case in which the amount of the nickel in the transition metal aqueous solution is 80 mol% or more, capacity characteristics may be further improved.

The ammonium cationic complexing agent and the basic compound may be the same as the ammonium cationic complexing agent and the basic compound which are used during the formation of the reaction mother liquor.

The seed forming step may be performed for 1 hour to 8 hours, for example, 1 hour to 5 hours. If the seed formation time is excessively short, since the seeds may not be sufficiently formed, productivity may be reduced and a particle size distribution of the precursor particles may be non-uniform. Also, if the seed formation time is excessively long, since reaction time required to grow the precursor particles to a desired particle diameter may be excessively increased, the productivity may be reduced and the particle size distribution may be non-uniform because some particles may grow during a seed formation process.

Furthermore, a pH of the reaction solution in the seed forming step may be in a range of 11.0 to 12.5, for example, 11.0 to 12.2, and a temperature of the reaction solution may be in a range of 40°C to 65°C, preferably 50°C to 65°C, and more preferably 50°C to 60°C. In a case in which the pH and temperature of the reaction solution satisfy the above ranges, nuclei of the positive electrode active material precursor are formed in the reaction solution, and a process of forming seeds by aggregation of the nuclei may be smoothly performed. The pH of the reaction solution may be controlled by a method of adjusting the addition amount of the basic compound using a pH sensor or the like.

### (2) Particle Growing Step

When the seeds are sufficiently formed through the process as described above, the precursor particles for a positive electrode active material are grown by performing a co-precipitation reaction while supplying a transition metal aqueous solution, an ammonium cationic complexing agent, and a basic compound to the reaction solution in which the precursor seeds have been formed.

In this case, feed rates of the transition metal aqueous solution and the ammonium cationic complexing agent are increased by two or more times, preferably 2 times to 10 times, and more preferably 2 times to 5 times, for example, 3 times to 5 times feed rates in the seed forming step. If the feed rates of the transition metal aqueous solution and the ammonium cationic complexing agent are rapidly increased by two or more times in the precursor particle growing step, surface density and primary particle size of the precursor particles formed are reduced while a reaction rate is increased due to an increase of the reaction raw material, and, as a result, precursor particles with a large specific surface area are prepared. If the precursor with a large specific surface area is used in the preparation of the positive electrode active material, reactivity between the precursor and the lithium raw material is improved in a sintering step to improve sintering uniformity and develop a crystal structure well. In order to obtain the above-described effect, the feed rate of the raw material must be rapidly increased, and, in a case in which the feed rate of the raw material in the particle growing step is less than twice the feed rate in the seed forming step, the effect of increasing the specific surface area is insignificant.

It is desirable that a feed rate increase rate of the transition metal aqueous solution and a feed rate increase rate of the ammonium cationic complexing agent are equal to each other. Herein, the feed rate increase rate means a ratio of the feed rate in the particle growing step to the feed rate in the seed forming step. That is, a ratio of the feed rate of the transition metal aqueous solution in the particle growing step to the feed rate of the transition metal aqueous solution in the seed forming step and a ratio of the feed rate of the ammonium cationic complexing agent in the particle growing step to the feed rate of the ammonium cationic complexing agent in the seed forming step may be the same. In a case in which the feed rate increase rate of the transition metal aqueous solution and the feed rate increase rate of the ammonium cationic complexing agent are different from each other, the specific surface area may be decreased due to an increase in particle density, or since a primary particle shape may be changed due to a change in crystal growth conditions, particle sphericity may be reduced.

The transition metal aqueous solution, the ammonium cationic complexing agent, and the basic compound, which are added in the particle growing step, are the same as those used in the seed forming step.

A pH of the reaction solution in the particle growing step may be in a range of 10.5 to 12.0, for example, 10.7 to 11.8, and a temperature of the reaction solution may be in a range of 40°C to 65°C, preferably 50°C to 65°C, and more preferably 50°C to 60°C. In a case in which the pH and temperature of the reaction solution satisfy the above ranges, particle growth may be performed smoothly. The pH of the reaction solution may be controlled by a method of adjusting the addition amount of the basic compound using a pH sensor or the like.

When the reactor is full in the particle growing step, after the supply of the raw material is stopped and the stirring is stopped to settle the precursor particles in the reaction solution, a supernatant is removed and the supply of the raw material is then resumed to proceed with a reaction. The reaction time required for the growth of the precursor particles may be sufficiently secured by performing the process of removing the supernatant in the reactor as described above, and a production amount of the precursor may be increased. The above process may be repeated two or more times.

When the precursor particles are sufficiently grown through the above process, precursor particles for a positive electrode active material may be obtained by separating the precursor particles from the reaction solution, and washing and then drying the precursor particles.

### Precursor for Positive Electrode Active Material

Next, a precursor for a positive electrode active material according to the present invention will be described.

The precursor for a positive electrode active material according to the present invention is a precursor for a positive electrode active material which is prepared by the above-described preparation method of the present invention.

The precursor for a positive electrode active material, which is prepared according to the preparation method of the present invention, has lower surface density and higher specific surface area than a conventional precursor for a positive electrode active material, and has a uniform particle size distribution.

Specifically, the precursor for a positive electrode active material according to the present invention may have a Brunauer-Emmett-Teller (BET) specific surface area of 10 m²/g to 20 m²/g, preferably 10 m²/g to 18 m²/g, and more preferably 10 m²/g to 15 m²/g. Also, the precursor for a positive electrode active material according to the present invention may have a tap density of 1.8 g/cc to 2.2 g/cc, preferably 1.8 g/cc to 2.1 g/cc, and more preferably 1.9 g/cc to 2.1 g/cc. Furthermore, the precursor for a positive electrode active material according to the present invention may have a (D90-D10)/D50 of 0.5 to 0.8, for example, 0.5 to 0.75.

If the BET specific surface area, the tap density, and the particle size distribution of the precursor satisfy the above ranges, the reactivity with lithium or a doping element during sintering is improved to improve sintering quality, and, as a result, a positive electrode active material having excellent capacity characteristics and structural stability may be prepared.

Specifically, the precursor for a positive electrode active material may be a hydroxide or oxyhydroxide containing nickel, cobalt and manganese, and, for example, may be a compound having a composition represented by the following [Formula 1] or [Formula 2].

[Formula 1] [NiₐCo_{b}Mn_{c}M¹_{d}](OH)₂

[Formula 2] [NiₐCo_{b}Mn_{c}M¹_{d}]O·OH

In Formulae 1 and 2, M¹ is at least one selected from the group consisting of Al, W, Mo, Cr, Zr, Ti, Mg, Ta, and Nb, and 0.8≤a<1, 0<b<0.2, 0<c<0.2, and 0≤d<0.1. Preferably, 0.85≤a<1, 0<b<0.15, 0<c<0.15, and 0≤d<0.1, and, more preferably, 0.9≤a<1, 0<b<0.1, 0<c<0.1, and 0≤d<0.1.

### Positive Electrode Active Material

The positive electrode active material precursor according to the present invention prepared as described above and a lithium raw material are mixed and then sintered to prepare a positive electrode active material.

The lithium raw material may be used without particular limitation as long as it is a compound including a lithium source, but, preferably, at least one selected from the group consisting of lithium carbonate (Li₂CO₃), lithium hydroxide (LiOH·H₂O), LiNO₃, CH₃COOLi, and Li₂(COO)₂ may be used.

The precursor and the lithium raw material may be mixed in amounts such that a molar ratio of transition metals (Me) included in the precursor:lithium (Li) is in a range of 1:1 to 1:1.2, for example, 1:1 to 1:1.1. In a case in which the lithium raw material is mixed in a ratio less than the above range, capacity of the prepared positive electrode active material may be reduced, and, in a case in which the lithium raw material is mixed in a ratio greater than the above range, since particles are sintered during a sintering process, the preparation of the positive electrode active material may be difficult, the capacity may be reduced, and separation of positive electrode active material particles may occur after the sintering.

Also, if necessary, a doping element M²-containing material may be additionally mixed during the sintering. The doping element M², for example, may be at least one selected from the group consisting of Al, W, Mo, Cr, Zr, Ti, Mg, Ta, and Nb, and the doping element M²-containing material may be at least one selected from the group consisting of an acetic acid salt, sulfate, sulfide, hydroxide, oxide, or oxyhydroxide containing the doping element M².

The sintering may be performed in a temperature range of 700°C to 800°C for 5 hours to 20 hours, for example, 700°C to 780°C for 5 hours to 15 hours, but the present invention is not limited thereto.

The positive electrode active material, for example, may be a lithium nickel cobalt manganese-based oxide represented by Formula 3 below.

[Formula 3] Li₁₊ₚNiₓCo_{y}Mn_{z}M²_{w}O₂

In Formula 3, M² may be at least one selected from the group consisting of Al, W, Mo, Cr, Zr, Ti, Mg, Ta, and Nb.
1+p represents a molar ratio of lithium in the lithium transition metal oxide, wherein p may satisfy 0≤p≤0.3, for example, 0≤p≤0.2.
x represents a molar ratio of nickel in total transition metals, wherein x may satisfy 0.80≤x<1.0, 0.85≤x<1, or 0.90≤x<1. In a case in which the nickel content satisfies the above range, excellent capacity characteristics may be achieved.
y represents a molar ratio of cobalt in the total transition metals, wherein y may satisfy 0<y<0.20, 0<y<0.15, or 0<y<0.10.
z represents a molar ratio of manganese in the total transition metals, wherein z may satisfy 0<z<0.20, 0<z<0.15, or 0.01<z<0.10.
w represents a molar ratio of M² in the total transition metals, wherein w may satisfy 0≤w≤0.1 or 0≤w≤0.05.

### Positive Electrode

Also, the present invention provides a positive electrode for a lithium secondary battery which includes the positive electrode active material prepared by the above-described method.

Specifically, the positive electrode includes a positive electrode collector and a positive electrode active material layer which is disposed on at least one surface of the positive electrode collector and includes the above-described positive electrode active material.

The positive electrode collector is not particularly limited as long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used. Also, the positive electrode collector may typically have a thickness of 3 um to 500 µm, and microscopic irregularities may be formed on the surface of the collector to improve the adhesion of the positive electrode active material. The positive electrode collector, for example, may be used in various shapes such as that of a film, a sheet, a foil, a net, a porous body, a foam body, a non-woven fabric body, and the like.

The positive electrode active material layer may include a conductive agent and a binder in addition to the positive electrode active material.

In this case, the positive electrode active material may be included in an amount of 80 wt% to 99 wt%, for example, 85 wt% to 98 wt% based on a total weight of the positive electrode active material layer. When the positive electrode active material is included in an amount within the above range, excellent capacity characteristics may be obtained.

In this case, the conductive agent is used to provide conductivity to the electrode, wherein any conductive agent may be used without particular limitation as long as it has suitable electron conductivity without causing adverse chemical changes in the battery. Specific examples of the conductive agent may be graphite such as natural graphite or artificial graphite; carbon based materials such as carbon black, acetylene black, Ketjen black, channel black, furnace black, lamp black, thermal black, and carbon fibers; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be typically included in an amount of 1 wt% to 30 wt% based on the total weight of the positive electrode active material layer.

The binder improves the adhesion between the positive electrode active material particles and the adhesion between the positive electrode active material and the current collector. Specific examples of the binder may be polyvinylidene fluoride (PVDF), polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated EPDM, a styrene-butadiene rubber (SBR), a fluorine rubber, or various copolymers thereof, and any one thereof or a mixture of two or more thereof may be used. The binder may be included in an amount of 1 wt% to 30 wt% based on the total weight of the positive electrode active material layer.

The positive electrode may be prepared according to a typical method of preparing a positive electrode except that the above-described positive electrode active material is used. For example, a positive electrode material mixture, which is prepared by dissolving or dispersing the above-described positive electrode active material as well as optionally the binder and the conductive agent in a solvent, is coated on the positive electrode collector, and the positive electrode may then be prepared by drying and rolling the coated positive electrode collector, or the positive electrode may be prepared by casting the positive electrode material mixture on a separate support and then laminating a film separated from the support on the positive electrode collector.

The solvent used in the preparation of the positive electrode material mixture may be a solvent normally used in the art. The solvent may include dimethyl sulfoxide (DMSO), isopropyl alcohol, N-methylpyrrolidone (NMP), acetone, or water, and any one thereof or a mixture of two or more thereof may be used. An amount of the solvent used may be sufficient if the solvent may dissolve or disperse the positive electrode active material, the conductive agent, and the binder in consideration of a coating thickness of a slurry and manufacturing yield, and may allow to have a viscosity that may provide excellent thickness uniformity during the subsequent coating for the preparation of the positive electrode.

### Lithium Secondary Battery

Furthermore, in the present invention, an electrochemical device including the positive electrode may be prepared. The electrochemical device may specifically be a battery or a capacitor, and, for example, may be a lithium secondary battery.

The lithium secondary battery specifically includes a positive electrode, a negative electrode disposed to face the positive electrode, a separator disposed between the positive electrode and the negative electrode, and an electrolyte, wherein, since the positive electrode is the same as described above, detailed descriptions thereof will be omitted, and the remaining configurations will be only described in detail below.

Also, the lithium secondary battery may further optionally include a battery container accommodating an electrode assembly of the positive electrode, the negative electrode, and the separator, and a sealing member sealing the battery container.

In the lithium secondary battery, the negative electrode includes a negative electrode collector and a negative electrode active material layer disposed on the negative electrode collector.

The negative electrode collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, the negative electrode collector may typically have a thickness of 3 um to 500 µm, and, similar to the positive electrode collector, microscopic irregularities may be formed on the surface of the collector to improve the adhesion of a negative electrode active material. The negative electrode collector, for example, may be used in various shapes such as that of a film, a sheet, a foil, a net, a porous body, a foam body, a non-woven fabric body, and the like.

The negative electrode active material layer optionally includes a binder and a conductive agent in addition to the negative electrode active material.

A compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a (semi)metal-based material alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a (semi)metal oxide which may be doped and undoped with lithium such as SiOβ(0<β<2), SnO₂, vanadium oxide, and lithium vanadium oxide; or a composite including the (semi)metal-based material and the carbonaceous material such as a Si-C composite or a Sn-C composite, and any one thereof or a mixture of two or more thereof may be used. Also, a metallic lithium thin film may be used as the negative electrode active material. The negative electrode active material may be included in an amount of 80 wt% to 99 wt% based on a total weight of the negative electrode active material layer.

The binder is a component that assists in the binding between the conductive agent, the active material, and the current collector, wherein the binder may typically be included in an amount of 0.1 wt% to 10 wt% based on the total weight of the negative electrode active material layer. Examples of the binder may be polyvinylidene fluoride (PVDF), polyvinyl alcohol, carboxymethylcellulose (CMC), starch, hydroxypropylcellulose, regenerated cellulose, polyvinylpyrrolidone, polytetrafluoroethylene, polyethylene, polypropylene, an ethylene-propylene-diene polymer (EPDM), a sulfonated-EPDM, a styrene-butadiene rubber, a fluoro rubber, and various copolymers thereof.

The conductive agent is a component for further improving conductivity of the negative electrode active material, wherein the conductive agent may be included in an amount of 10 wt% or less, for example, 5 wt% or less based on the total weight of the negative electrode active material layer. The conductive agent is not particularly limited as long as it has conductivity without causing adverse chemical changes in the battery, and, for example, a conductive material such as: graphite such as natural graphite or artificial graphite; carbon black such as acetylene black, Ketjen black, channel black, furnace black, lamp black, and thermal black; conductive fibers such as carbon fibers or metal fibers; fluorocarbon; metal powder such as aluminum powder, and nickel powder; conductive whiskers such as zinc oxide whiskers and potassium titanate whiskers; conductive metal oxide such as titanium oxide; or polyphenylene derivatives may be used.

For example, the negative electrode active material layer may be prepared by coating a negative electrode material mixture, which is prepared by dissolving or dispersing optionally the binder and the conductive agent as well as the negative electrode active material in a solvent, on the negative electrode collector and drying the coated negative electrode collector, or may be prepared by casting the negative electrode material mixture on a separate support and then laminating a film separated from the support on the negative electrode collector.

In the lithium secondary battery, the separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

Also, the electrolyte used in the present invention may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Specifically, the electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond, an aromatic ring or ether bond); amides such as dimethylformamide; dioxolanes such as 1,3-dioxolane; or sulfolanes may be used as the organic solvent. Among these solvents, the carbonate-based solvent may be used, and, for example, a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) may be used.

The lithium salt may be used without particular limitation as long as it is a compound capable of providing lithium ions used in the lithium secondary battery. Specifically, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂ may be used as the lithium salt. The lithium salt may be used in a concentration range of 0.1 M to 4.0 M. In a case in which the concentration of the lithium salt is included within the above range, since the electrolyte may have appropriate conductivity and viscosity, excellent performance of the electrolyte may be obtained and lithium ions may effectively move.

In order to improve life characteristics of the battery, suppress the reduction in battery capacity, and improve discharge capacity of the battery, the electrolyte may further include an additive.

The lithium secondary battery as described above may be suitably used in portable devices, such as mobile phones, notebook computers, and digital cameras, and electric cars such as hybrid electric vehicles (HEVs).

### PREFERRED MODE FOR CARRYING OUT THE INVENTION

Hereinafter, examples of the present invention will be described in detail in such a manner that it may easily be carried out by a person with ordinary skill in the art to which the present invention pertains. The invention may, however, be embodied in many different forms and should not be construed as being limited to the examples set forth herein.

### Example 1

(S-1) NiSO₄, CoSO₄, and MnSO₄ were dissolved in ion-exchanged water in amounts such that a molar ratio of nickel : cobalt : manganese was 92:4:4 to prepare a transition metal aqueous solution with a concentration of 2.28 M. Distilled water, ammonia water with a concentration of 15 wt%, and a sodium hydroxide aqueous solution with a concentration of 40 wt% were filled in a 20 L batch reactor, and a temperature of the reactor was increased while stirring at 600 rpm and purging N₂ gas.

(S-2) When a temperature of the solution in the reactor reached 58°C, the transition metal aqueous solution and ammonia water with a concentration of 15 wt% were quantitatively added for 3 hours at feed rates of 1,200 ml/hr and 108 ml/hr, respectively, and a pH of a reaction solution was maintained at 11.1 by adding a sodium hydroxide aqueous solution using a pH regulation pump.

(S-3) After 3 hours, the feed rate of the transition metal aqueous solution and the feed rate of the ammonia water were increased to 3,600 ml/hr and 324 ml/hr, respectively, and a co-precipitation reaction was performed while maintaining a pH of a reaction solution at 11.1 by adding a sodium hydroxide aqueous solution using a pH regulation pump.

(S-4) The supply of the reactants was stopped when a volume of the reaction solution reached 20 L, stirring was stopped to settle a precursor intermediate product, and a supernatant was then removed to restart a reaction again. This operation was repeated about 5 times and the reaction was terminated when an average particle diameter D₅₀ of precursor particles reached 15 um. A total reaction time was 15 hours.

(S-5) After separating the precursor particles from the reaction solution, impurities were removed through washing, and the washed precursor particles were dried for 12 hours in a drying oven at 110°C and then sieved to prepare a precursor for a positive electrode active material.

(S-6) After the precursor prepared as described above, LiOH, Al₂O₃, and ZrO₂ were mixed so that a molar ratio of (Ni+Co+Mn) : Li : Al : Zr was 1 : 1.03 : 0.02 : 0.004, sintering was performed at 740°C for 10 hours to prepare a positive electrode active material.

### Example 2

A positive electrode active material was prepared in the same manner as in Example 1 except that the feed rate of the transition metal aqueous solution and the feed rate of the ammonia water were increased to 6,000 ml/hr and 540 ml/hr, respectively, in (S-3) and the total reaction time was 10 hours.

### Comparative Example 1

(S-1) NiSO₄, CoSO₄, and MnSO₄ were dissolved in ion-exchanged water in amounts such that a molar ratio of nickel : cobalt : manganese was 92:4:4 to prepare a transition metal aqueous solution with a concentration of 2.28 M. Distilled water, ammonia water with a concentration of 15 wt%, and a sodium hydroxide aqueous solution with a concentration of 40 wt% were filled in a 20 L batch reactor, and a temperature of the reactor was increased while stirring at 600 rpm and purging N₂ gas.

(S-2) When a temperature of the solution in the reactor reached 58°C, the transition metal aqueous solution and ammonia water with a concentration of 15 wt% were quantitatively added at feed rates of 1,200 ml/hr and 108 ml/hr, respectively, and a co-precipitation reaction was performed while maintaining a pH of a reaction solution at 11.1 by adding a sodium hydroxide aqueous solution using a pH regulation pump.

(S-3) The supply of the reactants was stopped when a volume of the reaction solution reached 20 L, stirring was stopped to settle a precursor intermediate product, and a supernatant was then removed to restart a reaction again. This operation was repeated about 5 times and the reaction was terminated when an average particle diameter D₅₀ of precursor particles reached 15 um. A total reaction time was 40 hours.

(S-4) After separating the precursor particles from the reaction solution, impurities were removed through washing, and the washed precursor particles were dried for 12 hours in a drying oven at 110°C and then sieved.

(S-5) After the precursor prepared as described above, LiOH, Al₂O₃, and ZrO₂ were mixed so that a molar ratio of (Ni+Co+Mn) : Li : Al : Zr was 1 : 1.03 : 0.02 : 0.004, sintering was performed at 740°C for 10 hours to prepare a positive electrode active material.

### Comparative Example 2

A precursor for a positive electrode active material and a positive electrode active material were prepared in the same manner as in Example 1 except that the feed rate of the transition metal aqueous solution and the feed rate of the ammonia water were increased to 1,800 ml/hr and 162 ml/hr, respectively, in (S-3) of Example 1 and the total reaction time was 30 hours.

### Comparative Example 3

A precursor for a positive electrode active material and a positive electrode active material were prepared in the same manner as in Comparative Example 1 except that the transition metal aqueous solution and ammonia water with a concentration of 15 wt% were quantitatively added at feed rates of 3,600 ml/hr and 324 ml/hr, respectively, in (S-2) of Comparative Example 1 and the total reaction time was 13 hours.

### Comparative Example 4

A precursor for a positive electrode active material and a positive electrode active material were prepared in the same manner as in Comparative Example 1 except that the transition metal aqueous solution and ammonia water with a concentration of 15 wt% were quantitatively added at feed rates of 6,000 ml/hr and 540 ml/hr, respectively, in (S-2) of Comparative Example 1 and the total reaction time was 8 hours.

### Experimental Example 1 - Precursor Powder Characteristics Evaluation

Average particle diameters (D50), BET specific surface areas, and tap densities of the precursors for a positive electrode active material prepared in Example 1, Comparative Example 1, and Comparative Example 2 were measured by the following methods.

Measurement results are presented in [Table 1] below.
(1) Average particle diameter D50: a volume-based cumulative particle size distribution was measured using a particle size distribution measurement instrument (Microtrac S3500, Microtrac).
(2) BET specific surface area: a specific surface area was measured by a BET method in which the specific surface area was calculated from a nitrogen gas adsorption amount at a liquid nitrogen temperature (77K) using BELSORP-mini II by Bell Japan Inc.
(3) Tap density: After measuring 50 g of the precursor for a positive electrode active material and putting it in a dedicated container, a volume was measured by tapping 3,000 times, and tap density was then calculated by dividing the weight by the volume. A KYT-4000 by SEISHIN Enterprise Co., LTD. was used as a measuring device.

**[Table 1]**

| | D50 [unit: µm] | BET [unit: m²/g] | Tap density [unit: g/cc] |
|---|---|---|---|
| Example 1 | 14.9 | 12.66 | 1.98 |
| Comparative Example 1 | 15.1 | 8.41 | 2.08 |
| Comparative Example 2 | 15.2 | 9.23 | 2.04 |

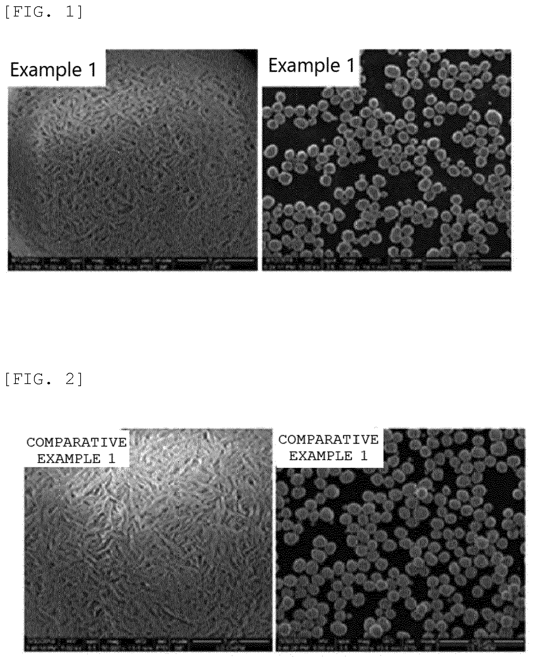

Also, surfaces of the particles of the precursors for a positive electrode active material and precursor powders prepared in Example 1, Comparative Example 1, and Comparative Example 2 were measured by a scanning electron microscope (SEM). SEM images of the precursors for a positive electrode active material prepared in Example 1, Comparative Example 1, and Comparative Example 2 are illustrated in FIG. 1, FIG. 2, and FIG. 3, respectively.

Referring to FIGS. 1 through 3, it may be confirmed that surface density and primary particle size of the precursor for a positive electrode active material prepared in Example 1 were reduced in comparison to those of the precursors for a positive electrode active material prepared in Comparative Examples 2 and 3.

### Experimental Example 2 - Precursor Particle Size Analysis

After collecting a sample from the reaction solution when 20% of the total reaction time had elapsed during the preparation of the precursors for a positive electrode active material of Examples 1 and 2 and Comparative Examples 3 and 4, a volume-based cumulative particle size distribution of the precursor particles formed in the reaction solution was measured using a particle size distribution measurement instrument (Microtrac S3500, Microtrac).

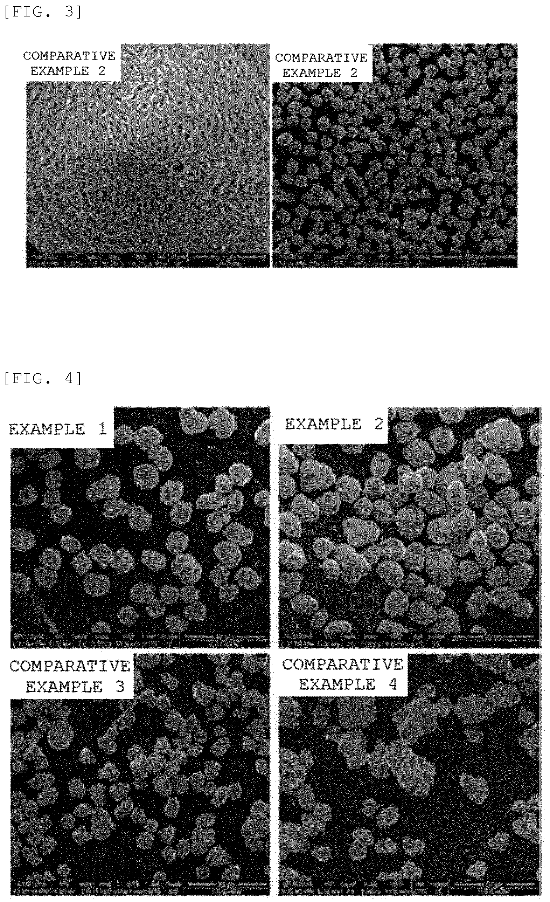

Measurement results are presented in [Table 2] and FIG. 4 below. SEM images illustrating particle size distributions of the precursor particles collected in Examples 1 and 2 and Comparative Examples 3 and 4 are illustrated in FIG. 4.

**[Table 2]**

| | D10 [um] | D50 [um] | D90 [um] | Span (D90-D10)/D50 |
|---|---|---|---|---|
| Example 1 | 6.48 | 8.71 | 12.67 | 0.71 |
| Example 2 | 7.35 | 9.92 | 14.48 | 0.72 |
| Comparative Example 3 | 5.04 | 7.14 | 10.85 | 0.81 |
| Comparative Example 4 | 6.62 | 10.09 | 16.17 | 0.95 |

Referring to [Table 2] and FIG. 4, it may be confirmed that the precursors for a positive electrode active material prepared by the methods of Examples 1 and 2 had a uniform particle size in comparison to the precursors for a positive electrode active material prepared by the methods of Comparative Examples 3 and 4. This shows that, in a case in which the feed rates of the reactants were high from an initial stage of the reaction as in Comparative Examples 3 and 4, particle sizes of the precursor particles formed were non-uniform.

### Experimental Example 3 - Capacity Characteristics Evaluation

A positive electrode slurry was prepared by mixing each of the positive electrode active materials prepared in Example 1 and Comparative Examples 1 and 2, a conductive agent, and a PVDF binder in a weight ratio of 97.5 : 1 : 1.5 in N-methyl-2-pyrrolidone (NMP). The slurry was coated on an aluminum current collector using a doctor blade, dried, and then roll-pressed to prepare a positive electrode.

An electrode assembly was prepared by stacking a polyethylene separator and a lithium metal negative electrode on the positive electrode prepared as described above, and an electrolyte solution was injected to prepare a coin cell. As the electrolyte solution, a solution, in which 1 M LiPF₆ was dissolved in an organic solvent in which ethylene carbonate (EC) : ethyl methyl carbonate (EMC) : dimethyl carbonate (DMC) were mixed in a volume ratio of 3 : 3 : 4, was used.

After each coin cell prepared as described above was charged at a constant current of 0.1 C rate until a voltage became 4.25 V at 25°C, each coin cell was discharged at a constant current of 0.1 C until the voltage reached 2.5 V, and charge capacity and discharge capacity were measured.

Also, after each coin cell prepared as described above was charged at a constant current of 0.2 C rate until a voltage became 4.25 V at 25°C, each coin cell was discharged at a constant current of 0.2 C until the voltage reached 2.5 V, and charge capacity and discharge capacity were measured.

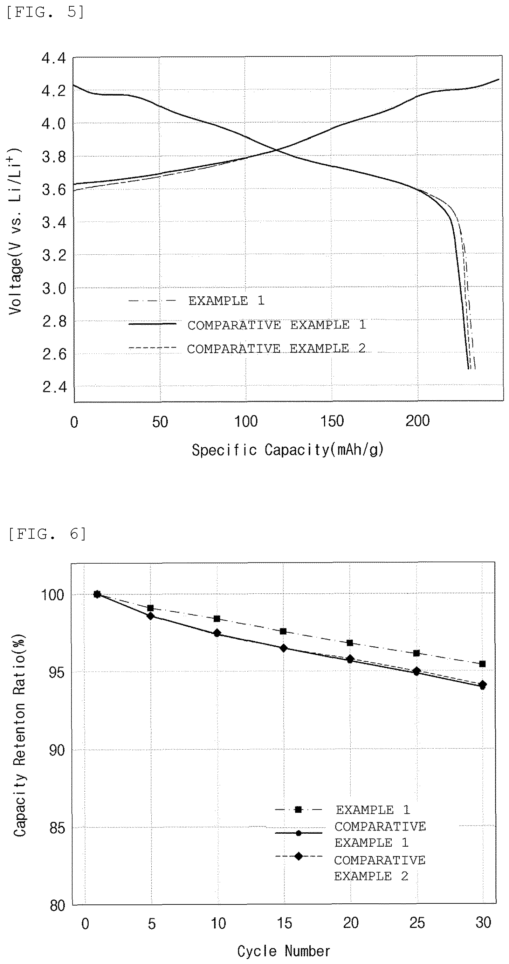

Measurement results are presented in Table 3 and FIG. 5 below. FIG. 5 is a graph illustrating specific capacity-voltage profiles during 0.1 C charge/0.1 C discharge.

**[Table 3]**

| | 0.1 C/0.1 C charge/discharge [unit: mAh/g] | | 0.2 C/0.2 C charge/discharge [unit: mAh/g] | |
|---|---|---|---|---|
| | Charge capacity | Discharge capacity | Charge capacity | Discharge capacity |
| Example 1 | 240.9 | 226.4 | 241.0 | 219.9 |
| Comparative Example 1 | 239.9 | 222.6 | 240.3 | 215.4 |
| Comparative Example 2 | 240.2 | 223.7 | 239.9 | 216.4 |

Referring to [Table 3] and FIG. 5, charge/discharge capacity of the secondary battery prepared by using the positive electrode active material of Example 1 was better than those of the secondary batteries prepared by using the positive electrode active materials of Comparative Examples 1 and 2, and it may be confirmed that the higher the charge/discharge rate was, the better the capacity improvement effect was.

### Experimental Example 4 - High-temperature Cycle Characteristics

The coin cells prepared in Experimental Example 3 were charged at a constant current of 0.33 C to 4.25 V at 45°C. Subsequently, each coin cell was discharged at a constant current of 0.33 C to 2.5 V. The above charging and discharging were set as one cycle, and, after this cycle was repeated 30 times, initial charge and discharge efficiencies and capacity retentions after 30 cycles of the lithium secondary batteries of Example 1 and Comparative Examples 1 and 2 were measured. In this case, the initial charge and discharge efficiency is a percentage of a ratio of discharge capacity to charge capacity after 1 cycle, and the capacity retention after 30 cycles is a percentage of a ratio of discharge capacity after 30 cycles to discharge capacity after 1 cycle.

Measurement results are presented in [Table 4] and FIG. 6 below.

**[Table 4]**

| | Initial charge and discharge efficiency [%] | Capacity retention after 30 cycles [%] |
|---|---|---|
| Example 1 | 94.5 | 95.4 |
| Comparative Example 1 | 92.4 | 94.0 |
| Comparative Example 2 | 93.1 | 94.2 |

Referring to Table 4 and FIG. 6, it may be confirmed that the secondary battery using the positive electrode active material of Example 1 had higher initial charge and discharge efficiency and capacity retention after 30 cycles than the secondary batteries respectively using the positive electrode active materials of Comparative Examples 1 and 2.

## Claims

1. A method of preparing a precursor for a positive electrode active material, the method comprising:
a seed forming step of forming precursor seeds for a positive electrode active material by performing a co-precipitation reaction while supplying a transition metal aqueous solution, an ammonium cationic complexing agent, and a basic compound to a reactor; and
a particle growing step of growing precursor particles for a positive electrode active material by performing a co-precipitation reaction while supplying a transition metal aqueous solution, an ammonium cationic complexing agent, and a basic compound to a reaction solution in which the precursor seeds for a positive electrode active material have been formed,
wherein feed rates of the transition metal aqueous solution and the ammonium cationic complexing agent in the particle growing step are two or more times feed rates of the transition metal aqueous solution and the ammonium cationic complexing agent in the seed forming step, respectively.

2. The method of claim 1, wherein the feed rates of the transition metal aqueous solution and the ammonium cationic complexing agent in the particle growing step are 2 times to 10 times the feed rates of the transition metal aqueous solution and the ammonium cationic complexing agent in the seed forming step, respectively.

3. The method of claim 1, wherein the feed rates of the transition metal aqueous solution and the ammonium cationic complexing agent in the particle growing step are 3 times to 5 times the feed rates of the transition metal aqueous solution and the ammonium cationic complexing agent in the seed forming step, respectively.

4. The method of claim 1, wherein a ratio of the feed rate of the transition metal aqueous solution in the particle growing step to the feed rate of the transition metal aqueous solution in the seed forming step and a ratio of the feed rate of the ammonium cationic complexing agent in the particle growing step to the feed rate of the ammonium cationic complexing agent in the seed forming step are equal.

5. The method of claim 1, wherein the seed forming step is performed for 1 hour to 8 hours.

6. The method of claim 1, wherein the transition metal aqueous solution comprises nickel, cobalt, and manganese elements, and comprises nickel among total transition metal elements in an amount of 30 mol% or more.

7. The method of claim 6, wherein the transition metal aqueous solution comprises the nickel among the total transition metal elements in an amount of 80 mol% or more.

8. The method of claim 1, wherein, in the seed forming step, the basic compound is added in an amount such that a pH of the reaction solution is maintained at 11.0 to 12.5.

9. The method of claim 1, wherein, in the particle growing step, the basic compound is added in an amount such that a pH of the reaction solution is maintained at 10.5 to 12.0.

10. The method of claim 1, wherein, in the seed forming step and the particle growing step, a temperature of the reaction solution is in a range of 40°C to 65°C.

11. A precursor for a positive electrode active material, the precursor prepared by the method of any one of claims 1 to 10.

12. The precursor for a positive electrode active material of claim 11, wherein the precursor for a positive electrode active material has a Brunauer-Emmett-Teller (BET) specific surface area of 10 m²/g to 20 m²/g, and has a tap density of 1.8 g/cc to 2.2 g/cc.

13. The precursor for a positive electrode active material of claim 11, wherein the precursor for a positive electrode active material has a (D90-D10)/D50 of 0.5 to 0.8.

14. The precursor for a positive electrode active material of claim 11, wherein the precursor for a positive electrode active material has a composition represented by [Formula 1] or [Formula 2].
[Formula 1] [NiₐCo_{b}Mn_{c}M¹_{d}](OH)₂
[Formula 2] [NiₐCo_{b}Mn_{c}M¹_{d}]O·OH
wherein, in Formulae 1 and 2,
M¹ is at least one selected from the group consisting of aluminum (Al), tungsten (W), molybdenum (Mo), chromium (Cr), zirconium (Zr), titanium (Ti), magnesium (Mg), tantalum (Ta), and niobium (Nb), and 0.8≤a<1, 0<b<0.2, 0<c<0.2, and 0≤d<0.1.
